# EUROPÄISCHE PATENTSCHRIFT

(11) **EP 2 914 427 B1**
(45) Veröffentlichungstag und Bekanntmachung des Hinweises auf die Patenterteilung: **07.11.2018**
(21) Anmeldenummer: 13776742.2
(22) Anmeldetag: 20.09.2013
(51) Int. Cl.: F16J 12/00, B32B 5/26, B32B 1/08, F16L 9/147

(54) **VERFAHREN ZUR HERSTELLUNG EINES VERBUNDKÖRPERS**
METHOD FOR PRODUCING A COMPOSITE BODY
PROCÉDÉ DE PRODUCTION D'UN CORPS COMPOSITE

(30) Priorität: 30.10.2012 DE 102012219870
(43) Veröffentlichungstag der Anmeldung: 09.09.2015
(73) Patentinhaber: Schunk Kohlenstofftechnik GmbH, 35452 Heuchelheim (DE)
(72) Erfinder: WEIß, Roland, 35625 Hüttenberg (DE); HENRICH, Martin, 35582 Wetzlar (DE); SCHEIBEL, Thorsten, 61231 Bad Nauheim (DE); EBERT, Marco, 35444 Biebertal (DE); LAUER, Andreas, 35274 Kirchhain (DE); KRENKEL, Walter, 95445 Bayreuth (DE); SPATZ, Carolin, 95466 Weidenberg (DE); MAILE, Karl, 70569 Stuttgart (DE); BERRETH, Karl, 71229 Leonberg (DE); SCHMIDT, Jens, 95445 Bayreuth (DE); ECKARDT, Christian, 95100 Selb (DE); BISCHOFF, Sandro, 95359 Kasendorf (DE); METZGER, Klaus, 67435 Neustadt/Weinstraße (DE); CZYCHON, Karl-Heinz, 69469 Weinheim (DE)
(74) Vertreter: advotec.
(86) Internationale Anmeldenummer: PCT/EP2013/069546
(87) Internationale Veröffentlichungsnummer: WO 2014/067706

(56) Entgegenhaltungen:
- WO-A1-2007/128837
- DE-A1-102010 043 645
- DE-T2- 69 013 606
- US-A- 2 744 043

## Beschreibung

Die Erfindung betrifft ein Verfahren zur Herstellung eines Verbundkörpers, wobei der Verbundkörper als ein Druckrohr ausgebildet ist, wobei der Verbundkörper aus einem Grundkörper aus Stahl und eine den Grundkörper zumindest abschnittsweise außenseitig umschließende Schicht aus einem Faserverbundwerkstoff gebildet wird, wobei zur Ausbildung des Faserverbundwerkstoffes der Grundkörper mit einem Faserwerkstoff umwickelt wird, wobei der Faserwerkstoff vor oder nach dem Umwickeln mit einem Harz imprägniert wird, wobei eine Erwärmung des gewickelten und imprägnierten Faserwerkstoffes erfolgt, um den Faserverbundwerkstoff auszubilden.

Derartige Verbundkörper finden regelmäßig beispielsweise bei Dampfturbinenprozessen oder ähnlichen Anwendungen Verwendung. Der Verbundkörper ist als ein Druckrohr ausgebildet, durch den ein Fluid mit einer Prozesstemperatur von 300 bis 650 °C bei einem Druck von bis zu 300 bar strömt. Der Grundkörper des Verbundkörpers ist regelmäßig aus einem martensitischen Stahl oder einem anderen hochlegierten Stahl gebildet. Durch das Umschließen des Grundkörpers mit einer weiteren Schicht aus einem Faserverbundwerkstoff wird der Vorteil erzielt, dass ein Kriechen des Stahls, welches durch die hohen Drücke und Temperaturen begünstigt wird, unterbunden werden kann.

So sind aus der WO 2007/128837 A1 derartige Verbundkörper bekannt, die einen Grundkörper mit zwei umschließenden Schichten aufweisen. Eine erste Schicht ist aus einem keramischen Faserverbundwerkstoff und eine zweite Schicht aus einem faserverstärkten Kunststoff oder aus faserverstärkter Keramik gebildet. Damit soll eine Erhöhung der Prozesstemperaturen im Vergleich zu Körpern, die allein aus Stählen bestehen, möglich sein. Beispielsweise kann dann ein thermischer Wirkungsgrad in einem Kraftwerk gesteigert werden.

Kennzeichnend für diese Verbundkörper ist, dass die jeweiligen Verbundkörper immer jeweils außerhalb des Kraftwerks bzw. der Industrieanlage, in der sie später zum Einsatz gelangen, hergestellt werden. Dies ist insofern erforderlich, da beispielsweise ein Druckrohr dann auf einer Maschine mit Filamenten des Faserverbundwerkstoffes umwickelt werden kann. Weiter wird ein Imprägnieren bzw. Durchtränken des Faserwerkstoffes mit Harz sowie ein abschließendes Aushärten unter Werkstattbedingungen erleichtert. Je nach angewendetem Verfahren kann es erforderlich sein, den Verbundkörper bzw. den Faserverbundwerkstoff durch Hitzebehandlung innerhalb eines Ofens über einen Zeitraum von mehreren Tagen auszuhärten. Durch die Behandlung in einem Ofen kann eine Erwärmung des Verbundkörpers relativ genau gesteuert und überwacht werden. Insbesondere bei einer Ausbildung des Faserverbundwerkstoffes durch Pyrolyse müssen besonders hohe Prozesstemperaturen eingehalten werden, die regelmäßig in einem Bereich von über 700 °C liegen. Nach der Ausbildung des Verbundkörpers wird dieser dann in einem Kraftwerk oder einer ähnlichen Anlage verbaut.

Bei älteren Kraftwerken oder derartigen Anlagen besteht das Problem, dass bei diesen gemäß der deutschen Druckbehälterverordnung nach einer bestimmten Betriebsdauer ein Austausch von Druckrohren oder Druckbehältern erforderlich wird. Über einen langen Zeitraum von mehreren Jahren erfolgt durch Alterung bzw. Kriechen des Stahls beispielsweise eine Querschnittsänderung des betreffenden Druckrohres oder Druckbehälters, wodurch dessen Druckfestigkeit herabgesetzt ist. Nach der Druckbehälterverordnung ist dann ein Austausch des betreffenden Druckrohres oder Druckbehälters notwendig. Dies betrifft insbesondere ältere Anlagen, in denen noch keine Verbundkörper der vorgenannten Art verbaut wurden. Die Kosten für einen Austausch der Druckrohre oder Druckbehälter sind jedoch erheblich, da dazu ein Stillstand der gesamten Anlage über einen längeren Zeitraum erforderlich ist. Es wäre daher wünschenswert, einen Stillstand der Anlage zu vermeiden bzw. einen Austausch der Druckrohre oder Druckbehälter möglichst lange aufzuschieben, beispielsweise bis zu einer endgültigen Stilllegung der Anlage, so dass ein Austausch überflüssig wird.

Der vorliegenden Erfindung liegt daher die Aufgabe zugrunde, ein Verfahren zur Ertüchtigung von Druckrohren oder Druckbehältern vorzuschlagen, welches einen Anlagenstillstand vermeidet.

Diese Aufgabe wird durch ein Verfahren mit den Merkmalen des Anspruchs 1 gelöst.

Bei dem erfindungsgemäßen Verfahren zur Herstellung eines Verbundkörpers ist der Verbundkörper als ein Druckrohr ausgebildet, wobei der Verbundkörper aus einem Grundkörper aus Stahl und eine den Grundkörper zumindest abschnittsweise außenseitig umschließende Schicht aus einem Faserverbundwerkstoff gebildet wird, wobei zur Ausbildung des Faserverbundwerkstoffes der Grundkörper mit einem Faserwerkstoff umwickelt wird, wobei der Faserwerkstoff vor oder nach dem Umwickeln mit einem Harz imprägniert bzw. durchtränkt wird, wobei eine Erwärmung des gewickelten und imprägnierten Faserwerkstoffes erfolgt, um den Faserverbundwerkstoff auszubilden, wobei das Verfahren an einem eingebauten Druckrohr in situ durchgeführt wird, wobei die Erwärmung des umwickelten und imprägnierten Faserwerkstoffes auf bis zu 700 °C erfolgt.

Mit dem erfindungsgemäßen Verfahren wird folglich ein Anlagenstillstand vermieden, da der Verbundkörper während des Betriebs einer Anlage an einem Druckrohr oder einem Druckbehälter der Anlage ausgebildet wird, ohne dass diese ausgebaut werden müssten. Durch die Ausbildung des Verbundkörpers bzw. der den Grundkörper umschließenden Schicht aus dem Faserverbundwerkstoff kann ein Kriechen des martensitischen oder hochlegierten Stahls des Grundkörpers wirkungsvoll vermieden werden. Damit wird es möglich, eine Nutzungsdauer der Druckrohre oder Druckbehälter der Anlage um bis zu 20 Jahre zu verlängern und so gegebenenfalls einen Austausch der Druckrohre und Druckbehälter über einen Stilllegungszeitraum der Anlage hinaus zu verschieben. Durch das erfindungsgemäße Verfahren kann eine erhebliche Kosteneinsparung erzielt werden, da eine Außerbetriebnahme beispielsweise eines Kraftwerkes im Rahmen regelmäßiger Wartungsarbeiten gänzlich vermieden oder verkürzt werden kann. Die Ausbildung des Verbundkörpers bzw. des Faserverbundwerkstoffes am Grundkörper kann demnach an dem unter Druck stehenden, mit einem Fluid durchströmten Druckrohr oder Druckbehälter durch Umwickeln mit dem Faserwerkstoff erfolgen. Der Faserwerkstoff kann vor oder nach dem Umwickeln mit dem Harz durchtränkt werden, wobei zur Ausbildung des Faserverbundwerkstoffes nachfolgend eine Erwärmung bzw. Temperaturbeaufschlagung des Faserwerkstoffes an dem Druckrohr oder Druckbehälter erfolgt. Durch die Temperaturbeaufschlagung wird der Grundkörper auf nicht mehr als 700 °C erwärmt. Eine Verwendung einer höheren Temperatur für den Grundkörper, wie bei der Herstellung eines Verbundkörpers in einem Ofen einer Werkstatt nach dem Stand der Technik, ist hier nicht möglich, da der Grundkörper aufgrund des Betriebs der Anlage druckbelastet ist. Auch kann das Verfahren während einer bestimmungsgemäßen Verwendung des Druckrohres oder des Druckbehälters in situ durchgeführt werden. So kann der Verbundkörper während des Betriebs einer Anlage an einem Druckrohr oder einem Druckbehälter der Anlage ausgebildet werden, ohne dass diese außer Betrieb genommen werden müssten. Die Ausbildung des Verbundkörpers bzw. des Faserverbundwerkstoffes am Grundkörper kann demnach an dem beispielsweise auf 530 °C bis zu 700 °C erwärmten, unter Druck stehenden, mit einem Fluid durchströmten Druckrohr oder Druckbehälter durch Umwickeln mit dem Faserwerkstoff erfolgen.

Bei dem Verfahren kann als ein Harz Polysiloxanharz verwendet werden. Durch die Verwendung eines Polysiloxanharzes kann der Faserverbundwerkstoff ausgebildet werden, ohne dass allzu hohe Temperaturen zur Aushärtung und gegebenenfalls zur Pyrolyse des Harzes erforderlich wären.

Besonders vorteilhaft ist es, wenn ein vorimprägnierter Faserwerkstoff verwendet wird. Durch die Verwendung eines sogenannten Prepnegs kann der Grundkörper besonders leicht in situ mit dem Faserwerkstoff und dem Harz umwickelt werden. Da beispielsweise in einem Kraftwerk regelmäßig eine Vielzahl von Druckrohren aus Platzgründen relativ dicht nebeneinander verlegt sind, ist es häufig nicht möglich, das betreffende Druckrohr mittels einer dafür vorgesehenen Maschine mit dem Faserwerkstoff zu umwickeln und abschließend mit Harz zu imprägnieren. Ein vorimprägnierter Faserwerkstoff kann besonders einfach auch manuell direkt auf den Grundkörper selbst bei beengten Raumverhältnissen aufgebracht werden. Für die Aufbringung des Faserverbundwerkstoffs können UD-Bänder, Gewebe und Rovings verwedet werden. Bei der Verwendung von Gewebe können auch Gewebeabschnitte/Einzellagen abgelegt werden, so dass sich Stöße ergeben. Dadurch wird die Gefahr von Delaminationen und Falten bei dicken Wandstärken vermindert. Bei der Umwicklung geometrisch komplexer Grundkörper z. B. Rohrbögen oder Rohre mit Abgängen, können bevorzugt UD-Gewebebänder, mit Breiten von mehreren Zentimetern verwendet werden.

Vor einem Aufbringen kann der vorimprägnierte Faserwerkstoff in einer Schutzfolie zum Schutz vor Feuchtigkeit eingeschweißt werden. Damit wird es möglich, den imprägnierten Faserwerkstoff über einen längeren Zeitraum zu lagern und zu transportieren. Beispielsweise kann dann der Faserwerkstoff in einer Werkstatt einfach vorimprägniert und nachfolgend direkt an den Einbauort, beispielsweise ein Kraftwerk, verbracht werden, ohne dass der vorimprägnierte Faserwerkstoff durch Aufnahme von Feuchtigkeit geschädigt werden könnte.

Darüber hinaus kann der gewickelte und imprägnierte Faserwerkstoff mit einer Schrumpffolie umwickelt werden. Die Schrumpffolie kann vor einem Erwärmen des imprägnierten Faserwerkstoffes durch eine kurze Temperaturbeaufschlagung auf den imprägnierten Faserwerkstoff so aufgeschrumpft werden, dass der imprägnierte Faserwerkstoff im Wesentlichen luftdicht abgeschlossen ist. Damit kann eine unerwünschte Oxidation des umwickelten, imprägnierten Faserwerkstoffes während der noch nachfolgenden Arbeiten verhindert werden. Darüber hinaus kann dann mittels der Schrumpffolie eine Oberfläche des fertigen Faserverbundwerkstoffes vergleichsweise glatt und frei von Verunreinigungen hergestellt werden. Eine abschließende Demontage der Schrumpffolie kann unterbleiben, da diese beim Vorgang der Erwärmung eliminiert werden kann.

Vorzugsweise kann der Faserwerkstoff aus Fasern aus Aluminiumoxid, Siliziumcarbid, nitritgebundenem Siliziumcarbid, Glas oder Basalt gebildet werden. Derartige Fasern eignen sich besonders gut zur Ausbildung eines Faserverbundwerkstoffes mittels Pyrolyse bei niedrigen Temperaturen. Dennoch können diese Fasern noch eine hohe Festigkeit gewährleisten. Auch kann vorgesehen sein, mehrere Lagen jeweils mit unterschiedlichen Faserwerkstoffen auszubilden.

Weiter können auch Fasermatten des Faserwerkstoffes verwendet werden. Dann wird es möglich, den Faserwerkstoff besonders schnell um beispielsweise ein Druckrohr herumzuwickeln, um das Druckrohr mit einer ausreichenden Menge Faserwerkstoff zu umgeben. Eine Arbeitsdauer an beispielsweise bis zu 300 °C heißen Druckrohren kann dann erheblich verkürzt werden.

Weiter kann vorgesehen sein, dass Fasern des Faserwerkstoffes zu mindestens 2/3 radial in Umfangsrichtung des Druckrohres oder des Druckbehälters orientiert sind. Die Fasern können demnach so orientiert sein, dass die radialen Druckkräfte des Druckrohrs oder des Druckbehälters von dem Faserwerkstoff besonders gut aufgenommen werden können. Dadurch, dass die Fasern nicht allein radial orientiert sind, ist es weiter möglich, den Faserwerkstoff auch beispielsweise in Bogenabschnitten von Druckrohren oder Bereichen ähnlicher Gestalt von Druckbehältern zu verwenden, da der Faserwerkstoff auch axiale Kräfte aufnehmen kann. Weiter kann es auch vorgesehen sein, den Faserverbundwerkstoff bzw. den Verbundkörper im Bereich einer Verbindungsschweißnaht eines Druckrohres oder Druckbehälters auszubilden, da diese Bereiche regelmäßig eine geringere Festigkeit aufweisen können. Die Orientierung der Fasern kann bereits durch die Ausbildung von Fasermatten vorgegeben sein oder alternativ durch Wickeln von Endlosfasersträngen in den entsprechenden Richtungen erfolgen.

Um eine Minderung einer Festigkeit des Druckrohres oder des Druckbehälters bzw. um eine Kriechdehnung des Stahls während des Betriebs zu vermeiden, kann vorgesehen sein, dass die Erwärmung des Grundkörpers nur bis unterhalb einer Anlasstemperatur des Stahls erfolgt.

So kann die Erwärmung des imprägnierten Faserwerkstoffes bzw. des Stahls des Grundkörpers auf mindestens 500 °C bis zu 680 °C erfolgen. Einerseits kann dann der Faserverbundwerkstoff ausgehärtet und durch Pyrolyse ausgebildet werden, und andererseits wird eine Schädigung des Grundkörpers durch die Anwendung des Verfahrens verhindert.

Das Verfahren wird besonders schnell durchgeführt, dadurch die Erwärmung in einem Schritt eine Härtung und eine Pyrolyse des gewickelten und imprägnierten Faserwerkstoffes erfolgen. Daher wird auf eine Absenkung einer Temperatur nach der Härtung verzichtet. Ein Temperaturgradient kann bei einer Pyrolisierung und Keramisierung zunächst zu einer Spannungsumlagerung (plastisch verformbare Matrix) und nach einer Abkühlung zu einem Eigenspannungszustand in einer Umwicklung führen. Dieser Eigenspannungszustand bewirkt an einem Außenrand der Umwicklung Zugspannungen in den Fasern und an einem Innenrand der Umwicklung Druckeigenspannungen in den Fasern. Dies wirkt sich bei einer späteren Druckbeanspruchung eines Innenrohres günstig auf die gesamte Tragfähigkeit des Innenrohres aus.

Um eine mögliche Selbstentzündung von im Rahmen der Ausbildung des Faserverbundwerkstoffes verwendeten Materialien bei einer Erwärmung zu verhindern, kann eine Aufheizgeschwindigkeit vorzugsweise bis zu 1 K/min betragen. Auch kann dann ein eventuelles, unerwünschtes Verbrennen oder Verkoken von verwendeten Isoliermaterialien oder Heizeinrichtungen verhindert werden.

Zur Erwärmung kann ein Widerstandsdraht, eine Heizmatte und/oder ein Heizband verwendet werden. Der Widerstandsdraht kann beispielsweise aus einem NiCr-Draht bestehen und um das Druckrohr oder den Druckbehälter mit dem Faserwerkstoff herum gewickelt werden. Weiter kann das Druckrohr oder der Druckbehälter mit einem Heizband umwickelt oder mit einer Heizmatte abgedeckt werden. Kombinationen der vorgenannten Heizeinrichtungen sind selbstverständlich auch möglich. Um einen Wärmeverlust oder auch eine Flammenbildung zu vermeiden, kann die Heizeinrichtung weiter mit einem feuerfesten Isoliermaterial umgeben werden.

Um ein Kriechverhalten des Stahls des Grundkörpers überprüfen zu können, kann zumindest ein Dehnungsmessstreifen oder ein ähnlicher derartiger Sensor mit dem Faserwerkstoff umwickelt werden. Der Dehnungsmessstreifen kann dann vor einem Umwickeln unmittelbar auf einer Außenfläche des Grundkörpers aufgebracht werden, so dass auch nach Ausbildung des Verbundkörpers eine Dehnungsmessung des Grundkörpers möglich ist.

Weiter kann zumindest ein Temperatursensor mit dem Faserwerkstoff umwickelt werden. Da insbesondere eine maximal mögliche Temperatur des Stahls des Grundkörpers nicht überschritten werden darf, kann der Temperatursensor unmittelbar auf dem Stahl des Druckrohrs oder Druckbehälters aufgebracht werden. So wird es dann auch möglich, eine Aufheizkurve beim Erwärmen unmittelbar zu kontrollieren bzw. die Erwärmung mittels des Temperatursensors zu steuern.

Um eine besonders hohe Festigkeit des Faserverbundwerkstoffes zu erzielen, kann nach einer Pyrolyse eine Nachimprägnierung des Faserverbundwerkstoffes mit Harz erfolgen. Nach der Nachimprägnierung kann dann jeweils wieder eine Pyrolyse des bei der Nachimprägnierung hinzugefügten Harzes erfolgen. Der Vorgang der Nachimprägnierung und Pyrolyse kann vorzugsweise bis zu drei Mal wiederholt werden. Durch ein nochmaliges Ausfüllen von eventuellen Hohlräumen des Faserverbundwerkstoffes mit Harz kann ein Faserverbundwerkstoff mit besonders hoher Dichte und damit Festigkeit erzeugt werden.

Die Nachimprägnierung kann besonders einfach mittels Vakuuminfusion erfolgen. Die Vakuuminfusion kann dadurch durchgeführt werden, dass der erstmalig pyrolysierte Faserverbundwerkstoff von einem mit Harz gefüllten Schlauch umgeben wird, wobei der Schlauch mit einem Vakuum beaufschlagt wird. In Hohlräumen des Faserverbundwerkstoffes befindliche Gase werden so entfernt, so dass das Harz leicht in den Faserverbundwerkstoff bzw. dessen Hohlräume eindringen kann.

Der Grundkörper, an dem das Verfahren angewendet wird, kann insbesondere eine Rohrleitung sein. Auch kann es vorgesehen sein, die Rohrleitung nicht über eine gesamte Länge zu einem Verbundkörper auszubilden, sondern nur in Bereichen einer Verbindungsschweißnaht und von Bögen der Rohrleitung, da diese Bereiche erfahrungsgemäß regelmäßig zuerst eine verminderte Festigkeit nach einem langen Nutzungszeitraum aufweisen.

Nachfolgend wird eine bevorzugte Ausführungsform der Erfindung unter Bezugnahme auf die beigefügten Zeichnungen näher erläutert.

Es zeigen:
- **Fig. 1**: Eine Querschnittansicht eines Verbundkörpers;
- **Fig. 2**: eine abschnittsweise Längsschnittansicht des Verbundkörpers.

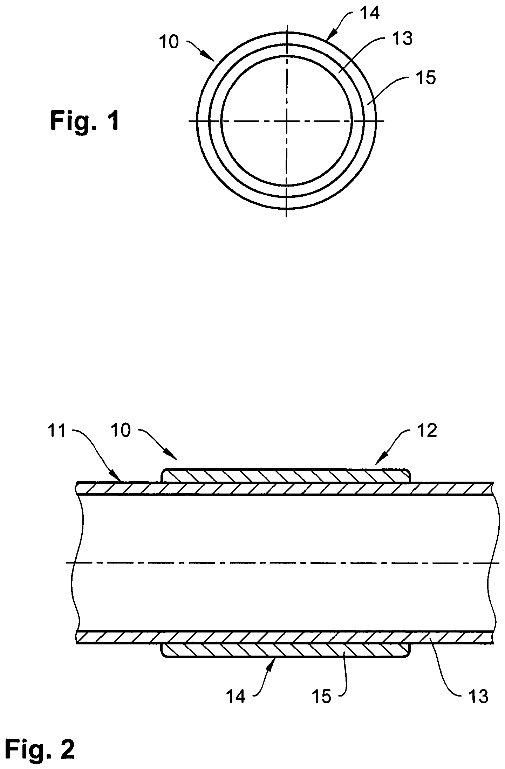

Eine Zusammenschau der **Fig. 1** und **2** zeigt einen Verbundkörper 10 einer Rohrleitung 11. Der Verbundkörper 10 ist in einem Bereich 12 der Rohrleitung 11 ausgebildet, der eine hier nicht näher dargestellte Verbindungsschweißnaht aufweist. Ein Grundkörper 13 der Rohrleitung 11 besteht aus martensitischem Stahl und weist einen Durchmesser von bis zu 300 mm auf. Eine Wandstärke des Grundkörpers beträgt bis zu 32 mm. Der Grundkörper 13 ist mit einer Schicht 14 umgeben, die aus einem Faserverbundwerkstoff 15 gebildet ist.

Die hier dargestellte Rohrleitung 11 bzw. der Verbundkörper 10 wird von einem hier nicht dargestellten Fluid mit einem hohen Druck und einer hohen Temperatur durchströmt. Der Faserverbundwerkstoff 15 wurde auf die eingebaute Rohrleitung 11 während des Betriebs der Rohrleitung 11 auf diese aufgebracht bzw. auf dieser ausgebildet. Dazu wurde der Grundkörper 13 mit einem Faserwerkstoff umwickelt, wobei mit einem Harz imprägnierte Fasermatten verwendet wurden. Danach wurde der gewickelte und imprägnierte Faserwerkstoff mit einer Schrumpffolie abgedeckt und auf bis zu 680 °C erwärmt. Die Erwärmung erfolgte mittels Heizelementen, die um den umwickelten und imprägnierten Faserwerkstoff herum angeordnet wurden. Bei der Erwärmung wurde eine Aushärtung des imprägnierten Faserwerkstoffes mit nachfolgender Pyrolyse desselben durchgeführt. Durch eine mehrmalige Nachimprägnierung des Faserverbundwerkstoffes 15 mit Harz durch Vakuuminfusion mit nachfolgender Pyrolyse wurde eine Dichte und damit eine Festigkeit der Schicht 14 noch weiter erhöht. Die Schicht 14 bzw. der Faserverbundwerkstoff 15 kann somit nun von der Rohrleitung 11 auf die Schicht 14 wirkende radiale Kräfte aufnehmen und so ein Kriechen des Stahls der Rohrleitung 11 im Bereich 12 weitestgehend vermeiden.

## Patentansprüche

1. Verfahren zur Herstellung eines Verbundkörpers (10), wobei der Verbundkörper als ein Druckrohr ausgebildet ist, wobei das Druckrohr aus einem Grundkörper (13) aus Stahl und einer den Grundkörper zumindest abschnittsweise außenseitig umschließenden Schicht (14) aus einem Faserverbundwerkstoff (15) gebildet wird, wobei der Grundkörper eine Rohrleitung ist, wobei zur Ausbildung des Faserverbundwerkstoffs die Rohrleitung mit einem Faserwerkstoff umwickelt wird, wobei der Faserwerkstoff vor oder nach dem Umwickeln mit einem Harz imprägniert wird, wobei eine Erwärmung des gewickelten und imprägnierten Faserwerkstoffs erfolgt, um den Faserverbundwerkstoff auszubilden, **dadurch gekennzeichnet, dass** das Verfahren an einem eingebauten Druckrohr in situ durchgeführt wird, wobei die Erwärmung des umwickelten und imprägnierten Faserwerkstoffs auf bis zu 700 °C erfolgt, wobei durch die Erwärmung in einem Schritt eine Härtung und eine Pyrolyse des gewickelten und imprägnierten Faserwerkstoffs erfolgt.

2. Verfahren nach Anspruch 1,
**dadurch gekennzeichnet,**
**dass** das Verfahren während einer bestimmungsgemäßen Verwendung des Druckrohrs in situ durchgeführt wird.

3. Verfahren nach Anspruch 1 oder 2,
**dadurch gekennzeichnet,**
**dass** als Harz ein Polysiloxanharz verwendet wird.

4. Verfahren nach einem der vorangehenden Ansprüche,
**dadurch gekennzeichnet,**
**dass** ein vorimprägnierter Faserwerkstoff verwendet wird.

5. Verfahren nach Anspruch 4,
**dadurch gekennzeichnet,**
**dass** der vorimprägnierte Faserwerkstoff in einer Schutzfolie eingeschweißt wird.

6. Verfahren nach einem der vorangehenden Ansprüche,
**dadurch gekennzeichnet,**
**dass** der gewickelte und imprägnierte Faserwerkstoff mit einer Schrumpffolie umwickelt wird.

7. Verfahren nach einem der vorangehenden Ansprüche,
**dadurch gekennzeichnet,**
**dass** der Faserwerkstoff aus Fasern aus Aluminiumoxid, Siliziumcarbid oder nitritgebundenem Siliziumcarbid gebildet wird.

8. Verfahren nach einem der vorangehenden Ansprüche,
**dadurch gekennzeichnet,**
**dass** Fasermatten des Faserwerkstoffs verwendet werden.

9. Verfahren nach einem der vorangehenden Ansprüche,
**dadurch gekennzeichnet,**
**dass** Fasern des Faserwerkstoffs zu mindestens 2/3 radial in Umfangsrichtung des Druckrohrs orientiert sind.

10. Verfahren nach einem der vorangehenden Ansprüche,
**dadurch gekennzeichnet,**
**dass** die Erwärmung bis unterhalb einer Anlasstemperatur des Grundkörpers erfolgt.

11. Verfahren nach einem der vorangehenden Ansprüche,
**dadurch gekennzeichnet,**
**dass** die Erwärmung auf mindestens 500 °C bis zu 680 °C erfolgt.

12. Verfahren nach einem der vorangehenden Ansprüche,
**dadurch gekennzeichnet,**
**dass** eine Aufheizgeschwindigkeit bis zu 1 K/min beträgt.

13. Verfahren nach einem der vorangehenden Ansprüche,
**dadurch gekennzeichnet,**
**dass** zur Erwärmung ein Widerstandsdraht, eine Heizmatte und/oder ein Heizband verwendet wird.

14. Verfahren nach einem der vorangehenden Ansprüche,
**dadurch gekennzeichnet,**
**dass** zumindest ein Dehnungsmessstreifen mit dem Faserwerkstoff umwickelt wird.

15. Verfahren nach einem der vorangehenden Ansprüche,
**dadurch gekennzeichnet,**
**dass** zumindest ein Temperatursensor mit dem Faserwerkstoff umwickelt wird.

16. Verfahren nach einem der vorangehenden Ansprüche,
**dadurch gekennzeichnet,**
**dass** eine Nachimprägnierung des Faserverbundwerkstoffs mit Harz erfolgt.

17. Verfahren nach Anspruch 16,
**dadurch gekennzeichnet,**
**dass** die Nachimprägnierung mittels Vakuuminfusion erfolgt.

## Claims

1. A method for producing a composite body (10), wherein the composite body is formed as a pressure pipe, wherein the pressure pipe is composed of a main body (13) that is made of steel and of a coat (14) that is made of a fibre composite (15), said coat enclosing the outside of the main body at least in some sections, wherein the main body is a pipe line, wherein, for forming the fibre composite, a fibrous material is wound around the pipe line, wherein the fibrous material is impregnated with a resin before or after winding, wherein the wound and impregnated fibrous material is heated in order to form the fibre composite,
**characterised in that**
the method is carried out in situ on a built-in pressure pipe, wherein the wound and impregnated fibrous material is heated to up to 700°C, wherein, through the heating process, the wound and impregnated fibrous material is cured and pyrolysed in one single step.

2. The method according to claim 1,
**characterised in that**
the method is carried out in situ while the pressure pipe is being used as intended.

3. The method according to claim 1 or 2,
**characterised in that**
the resin that is used is a polysiloxane resin.

4. The method according to any one of the preceding claims,
**characterised in that**
a pre-impregnated fibrous material is used.

5. The method according to claim 4,
**characterised in that**
the pre-impregnated fibrous material is sealed in a protective film.

6. The method according to any one of the preceding claims,
**characterised in that**
a shrink film is wound around the wound and impregnated fibrous material.

7. The method according to any one of the preceding claims,
**characterised in that**
the fibrous material is composed of fibres that are made of aluminium oxide, of silicon carbide or of silicon carbide that is nitride bonded.

8. The method according to any one of the preceding claims,
**characterised in that**
fibre mats of the fibrous material are used.

9. The method according to any one of the preceding claims,
**characterised in that**
two thirds of the fibres of the fibrous material, at the very least, are radially oriented in the circumferential direction of the pressure pipe.

10. The method according to any one of the preceding claims,
**characterised in that**
heating is effected until a tempering temperature of the main body has almost been reached.

11. The method according to any one of the preceding claims,
**characterised in that**
heating is effected to 500°C to up to 680°C, at the very least.

12. The method according to any one of the preceding claims,
**characterised in that**
a heating-up rate amounts to up to 1 K/min.

13. The method according to any one of the preceding claims,
**characterised in that**
a resistance wire, a heater mat and/or a heater band are/is used for heating.

14. The method according to any one of the preceding claims,
**characterised in that**
the fibrous material is wound around at least one wire resistance strain gauge.

15. The method according to any one of the preceding claims,
**characterised in that**
the fibrous material is wound around at least one temperature measuring sensor.

16. The method according to any one of the preceding claims,
**characterised in that**
the fibre composite is impregnated for a second time with a resin.

17. The method according to claim 16,
**characterised in that**
the second impregnation is effected with the aid of vacuum infusion.

## Revendications

1. Procédé de fabrication d'un corps composite (10), le corps composite étant réalisé sous la forme d'une conduite forcée, la conduite forcée se composant d'un corps de base (13) fabriqué en acier et d'une couche (14) fabriquée en un matériau composite renforcé par des fibres (15), ladite couche entourant le corps de base à l'extérieur au moins par passages, le corps de base étant un tuyautage, un matériau fibreux enveloppant le tuyautage pour réaliser le matériau composite renforcé par des fibres, le matériau fibreux étant imprégné d'une résine avant ou après l'enveloppement, le matériau fibreux enroulé et imprégné étant chauffé pour réaliser le matériau composite renforcé par des fibres,
**caractérisé en ce que**
le procédé est exécuté in situ sur une conduite forcée incorporée, le matériau fibreux enroulé et imprégné étant chauffé à une température allant jusqu'à 700°C, le matériau fibreux enroulé et imprégné étant durci et pyrolysé en une seule étape moyennant l'échauffement.

2. Procédé selon la revendication 1,
**caractérisé en ce que**
le procédé est exécuté in situ pendant l'utilisation de la conduite forcée conforme à sa destination.

3. Procédé selon la revendication 1 ou 2,
**caractérisé en ce que**
la résine utilisée est une résine polysiloxane.

4. Procédé selon l'une quelconque des revendications précédentes,
**caractérisé en ce qu'**
un matériau fibreux pré-imprégné est utilisé.

5. Procédé selon la revendication 4,
**caractérisé en ce que**
le matériau fibreux pré-imprégné est emballé sous feuille protectrice.

6. Procédé selon l'une quelconque des revendications précédentes,
**caractérisé en ce que**
du film rétractable est enroulé autour le matériau fibreux enroulé et imprégné.

7. Procédé selon l'une quelconque des revendications précédentes,
**caractérisé en ce que**
le matériau fibreux se compose de fibres en oxyde d'aluminium, en carbure de silicium ou carbure de silicium lié au nitrite.

8. Procédé selon l'une quelconque des revendications précédentes,
**caractérisé en ce que**
des mats de fibres du matériau fibreux sont utilisés.

9. Procédé selon l'une quelconque des revendications précédentes,
**caractérisé en ce que**
deux tiers des fibres du matériau fibreux, au moins, sont orientés dans la direction périphérique de la conduite forcée en sens radial.

10. Procédé selon l'une quelconque des revendications précédentes,
**caractérisé en ce que**
le chauffage s'effectue jusqu'à ce qu'une température de trempe du corps de base a été presque atteinte.

11. Procédé selon l'une quelconque des revendications précédentes,
**caractérisé en ce que**
le chauffage s'effectue jusqu'à une température d'au moins 500°C et allant jusqu'à 680°C.

12. Procédé selon l'une quelconque des revendications précédentes,
**caractérisé en ce qu'**
une vitesse de chauffage s'élève à une vitesse allant jusqu'à 1 K/min.

13. Procédé selon l'une quelconque des revendications précédentes,
**caractérisé en ce qu'**
un fil de résistance, une bande de traçage et/ou un ruban chauffant sont/est utilisé(s) pour le chauffage.

14. Procédé selon l'une quelconque des revendications précédentes,
**caractérisé en ce que**
le matériau fibreux est enveloppé autour au moins une jauge de contrainte.

15. Procédé selon l'une quelconque des revendications précédentes,
**caractérisé en ce que**
le matériau fibreux est enveloppé autour au moins un capteur de température.

16. Procédé selon l'une quelconque des revendications précédentes,
**caractérisé en ce que**
le matériau composite renforcé par des fibres est imprégné d'une résine une deuxième fois.

17. Procédé selon la revendication 16,
**caractérisé en ce que**
la deuxième imprégnation s'effectue au moyen de l'infusion sous vide.
